Europäisches Patentamt

European Patent Office

Office européen des brevets

(11) Veröffentlichungsnummer : **0 139 882**
B1

# (12) EUROPÄISCHE PATENTSCHRIFT

(45) Veröffentlichungstag der Patentschrift :
15.06.88

(21) Anmeldenummer : 84108658.0

(22) Anmeldetag : 21.07.84

(51) Int. Cl.⁴ : **H 02 K 13/04, H 01 R 39/32**

(54) Verbindung zwischen Ankerwicklungsenden und zugeordneten Segmenten eines Kommutators.

(30) Priorität : 06.08.83 DE 3328527

(43) Veröffentlichungstag der Anmeldung :
08.05.85 Patentblatt 85/19

(45) Bekanntmachung des Hinweises auf die Patenterteilung : 15.06.88 Patentblatt 88/24

(84) Benannte Vertragsstaaten :
DE FR GB

(56) Entgegenhaltungen :
DE-A- 3 126 626
DE-B- 2 723 893
US-A- 3 522 462
US-A- 4 155 499

(73) Patentinhaber : ROBERT BOSCH GMBH
Postfach 50
D-7000 Stuttgart 1 (DE)

(72) Erfinder : Bode, Werner
Franz-Hartmann-Weg 1
D-3200 Hildesheim (DE)
Erfinder : Franz, Peter
Scharze Riehe 27
D-3201 Diekholzen (DE)
Erfinder : Wilke, Heinrich
Bergmannsweg 24
D-3201 Diekholzen (DE)

Jouve, 18, rue St-Denis, 75001 Paris, France

**Beschreibung**

Stand der Technik

Die Erfindung betrifft eine Verbindung zwischen Ankerwicklungsenden und zugeordneten Segmenten eines Kommutators, die mit je einem Schlitz versehen sind, in welchem mindestens ein Wicklungsende eingelegt und elektrisch leitend und mechanisch an dem Segment befestigt ist.

Es ist schon bekannt, die Wicklungsenden in Nuten mit parallelen Seitenwänden mechanisch zu verstemmen. Bei der Befestigungsart ist jedoch von Nachteil, daß sie bei den heute an die Verbindung für den rauhen Betrieb in Kraftfahrzeugen gestellten Anforderungen an Schleuderfestigkeit und elektrisch sichere Kontaktierung sowie Wärmebeständigkeit nicht mehr genügt und Wicklungsenden sich losrütteln und aus den Kommutatorschlitzen ziehen können.

Weiterhin ist bekannt, die Wicklungsenden in den Schlitzen der Kommutatorsegmente durch Hot-staking zu verbinden, was die obengenannten Nachteile hat und wobei darüber hinaus die Isolierung zwischen den Segmenten, vor allem bei kleineren Kommutatoren oder Kommutatoren mit großer Segmentanzahl beschädigt werden kann.

Darüber hinaus ist es bekannt, die Wicklungsenden in den Kommutatorschlitzen weichzulöten. Weichlotverbindungen sind nicht ausreichend warmfest, so daß bei schnellaufenden Motoren mit größerer Erwärmung im Kommutatorbereich die Wicklungsenden aus den Segmentschlitzen wiederum herausgeschleudert werden können. Auch Hartlotverbindungen sind bekannt und zu teuer und unwirtschaftlich, da wegen der Wärmeentwicklung beim Hartlöten zusätzliche Maßnahmen zur Wärmeabfuhr und zum Schutz der Isolierung zwischen den Kommutatorsegmenten vorgesehen werden müssen.

Außerdem ist noch Diffusionsschweißen zum Verbinden der Ankerwicklungsenden in Schlitzen der Kommutatorsegmente bekannt, das jedoch zu zeitraubend für eine wirtschaftliche Großmengenfertigung ist und wiederum bei kleinen Kommutatoren oder Kommutatoren mit schmalen Segmenten teure Maßnahmen gegen Wärmeschäden an der Isolierung zwischen den Kommutatorsegmenten erfordert.

Schießlich ist noch ein Verfahren zum Verbinden von Wicklungsenden mit Kommutatorsegmenten nach der DE-A-31 28 626 bekannt, bei dem die Wicklungsenden in den Kommutatorschlitzen lediglich in radialer Richtung zur Längsachse des Kommutators plastisch verformt sind. Dazu ist der Kommutator nur am Schlitzgrund seiner Segmente mit mindestens einer Abweichung radial zur Längsachse des Kommutators versehen. An den Abweichungen soll jeweils das als Unterlage in den Schlitz eingesetzte Wicklungsende durch Druckbeaufschlagen plastisch verformt werden. Desgleichen soll bei diesem Druckbeaufschlagen das als Oberlage in den Schlitz eingesetzte Wicklungsende mit verformt werden. Danach werden noch Randabschnitte des Schlitzes durch Druckbeaufschlagen derart plastisch verformt, daß sie über die Oberlage gedrückt werden. Durch das radiale Druckbeaufschlagen sollen die Wicklungsenden gegen axiales Herausziehen aus dem Schlitz gesichert sein. Die beiden im Schlitz übereinander angeordneten Wicklungsenden müssen dazu so verformt werden, daß sie annähernd mit der jeweiligen Kontur der Abweichung(en) des Schlitzgrundes miteinander verbunden sind. Für dieses Umformen der Wicklungsenden im Schlitz wird ein verhältnismäßig hoher Umformdruck auf die Wicklungsenden ausgeübt, der über die Wicklungsenden auf den Schlitzgrund und das Segment auch auf den Isolierkörper wirkt, in dem die Segmente verankert sind. Der Umformdruck erreicht dabei Größen, die zu Schäden am Isolierkörper führen können. Außerdem werden über die im Schlitz verformten Wicklungsenden immer noch die Ränder des Schlitzes gedrückt. Für das Abdrücken oder Prägen der Schlitzränder werden die Segmente mit noch größeren radialen Druckkräften beaufschlagt als beim plastischen Verformen der Wicklungsenden. Bei einem großen Teil der Kommutatoren führen diese Druckkräfte zu Schäden an deren Isolierkörper, weil die Druckkräfte über die Segmente auf die Isolierkörper übertragen werden.

Aufgabe, Lösung und Vorteile der Erfindung

Der Erfindung liegt die Aufgabe zugrunde, eine formschlüssige Verbindung der Wicklungsenden mit den zugeordneten Kommutatorsegmenten durch einfaches Kaltumformen der Wicklungsenden zu erreichen.

Zur Lösung der Aufgabe sind die im Kennzeichen des Anspruchs 1 angegebenen Maßnahmen vorgesehen.

Dabei ist von Vorteil, daß die Kommutatorsegmente bereits beim Herstellen mit Schlitzen zur Aufnahme der Wicklungsenden versehen werden, an deren Seitenwänden Abweichungen in Umfangsrichtung des Kommutators ausgebildet sind. Diese Abweichungen der Seitenwände haben die Form von Erweiterungen oder Verengungen der Schlitze. Sie erstrecken sich über die ganze radiale Ausdehnung der Seitenwände vom offenen Schlitzrand bis zum Schlitzgrund. Beim Umformen der in den Schlitz eingelegten Wicklungsenden werden nur verhältnismäßig geringe Umformkräfte benötigt. Der dabei weggedrückte Werkstoff aller Wicklungsenden kann unmittelbar an die Abweichungen der Seitenwände in Umfangsrichtung des Kommutators ausweichen und sich — auch unter Ausnutzung des Reibungseffekts — fest an sie anschmiegen. So wird in einfacher Weise und vor allem mit geringer Druckkraft eine formschlüssige Verbindung zwischen Wicklungsenden und Kommutatorsegmenten geschaffen, ohne daß die Segmente umgeformt werden müssen und/oder der Isolierkörper durch zu hohe Druckbelastung beschädigt wird. Als weiterer Vorteil ist anzusehen, daß die Verbindung warmfest ist, wobei sie gegenüber Verfahren für warmfestes Löten und Schweißen mit Werkzeugen hoher Standzeit hergestellt werden kann und bei höheren Betriebstemperaturen und höheren Drehzahlen kein Lösen der Verbindung erfolgt. Darüberhinaus können die Wicklungsenden in einem Schlitz gleichzeitig oder nacheinander lageabhängig befestigt werden. Desgleichen lassen sich die Wicklungsenden in allen Schlitzen gleichzeitig oder nacheinander lageabhängig befestigen. Eine thermische Schädigung des Isolierstoffes zwischen den Kommutatorsegmenten findet nicht mehr statt.

Durch die in den Unteransprüchen aufgeführten Maßnahmen sind vorteilhafte Weiterbildungen der im Anspruch 1 angegebenen Verbindung möglich. Besonders vorteilhaft ist für große oder besonders schnell drehende Kommutatoren eine zusätzliches radiales Sichern der Wicklungsenden. Dazu braucht lediglich ein schmaler Randstreifen der Erweiterung des Segmentschlitzes um den Rand des in Umfangsrichtung an sie gedrückten Werkstoffs der Oberlage der Wicklungsenden gedrückt zu werden. Die dabei über das Segment auf den Isolierkörper wirkende Druckkraft ist unerheblich. Auch ein Scheren von Randabschnitten des Segmentschlitzes, welche als zusätzliche Sicherung Randabschnitte der Oberlage der Wicklungsenden umklammern können, übt keine den Isolierkörper in unerwünschter Weise beeinflussenden Kräfte auf die Segmente aus.

Hierfür haben sich die Vorrichtungen gemäss den mabhängigen Patentansprüchen 10-13 zum Herstellen der Verbindung zwischen Ankerwicklungsenden und zugeordnetem Kommutatorsegment als vorteilhaft erwiesen.

Ausführungsbeispiele der Erfindung sind in der Zeichnung dargestellt und in der nachfolgenden Beschreibung näher erläutert.

Es zeigen

Figur 1 einen Teil eines ersten Ausführungsbeispieles des Kommutators,

Figuren 2 und 3 gemeinsam eingelegte und verstemmte Ankerwicklungsenden,

Figuren 4 und 5 lagenweise eingelegte und verstemmte Wicklungsenden,

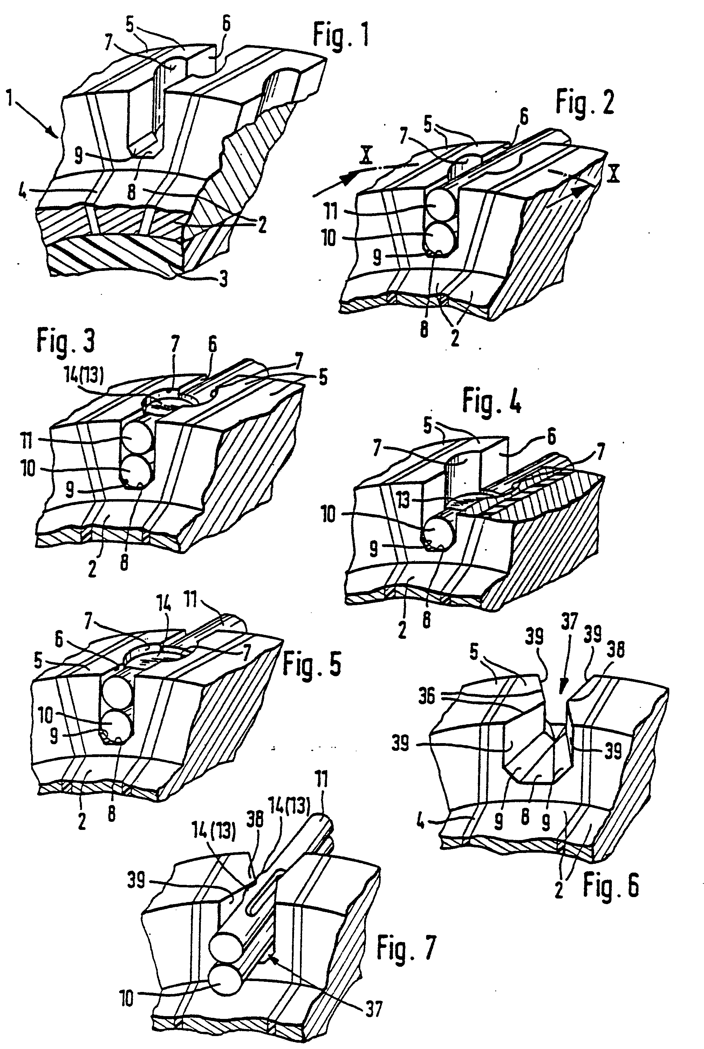

Figuren 2 bis 5 jeweils mit Kommutatorschlitz nach Figur 1,

Figur 6 einen Teil eines zweiten Ausführungsbeispieles des Kommutators,

Figur 7 gemeinsam eingelegte und verstemmte Ankerwicklungsenden im Kommutatorschlitz nach Figur 6,

Figuren 1 bis 7 jeweils in räumlicher Darstellung,

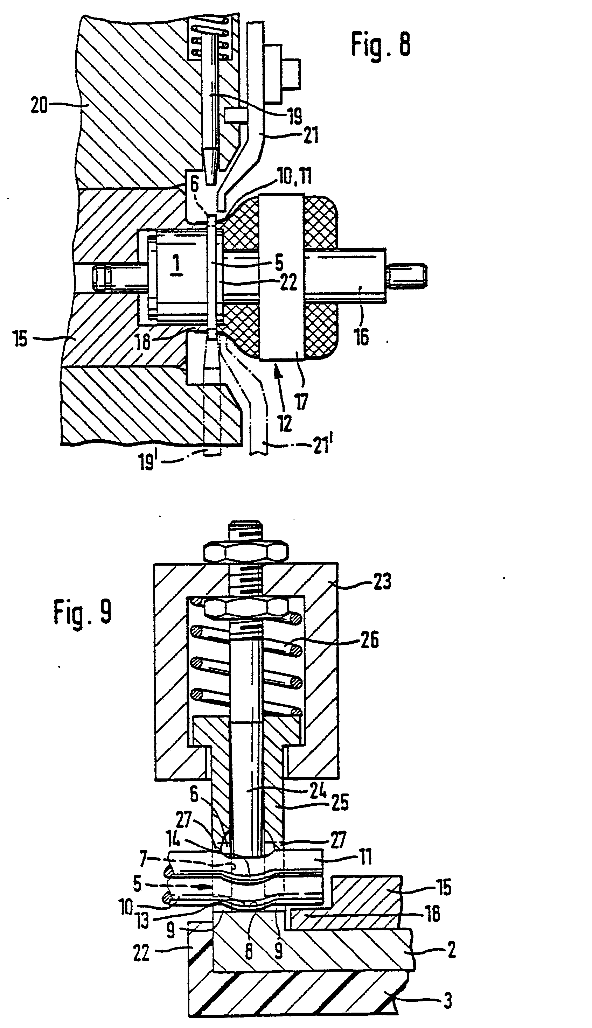

Figur 8 ein erstes Ausführungsbeispiel einer Vorrichtung mit dem Kommutator im Längsschnitt durch einen Schlitz,

Figur 9 ein zweites Ausführungsbeispiel der Vorrichtung mit dem Kommutator im Längsschnitt durch einen Schlitz,

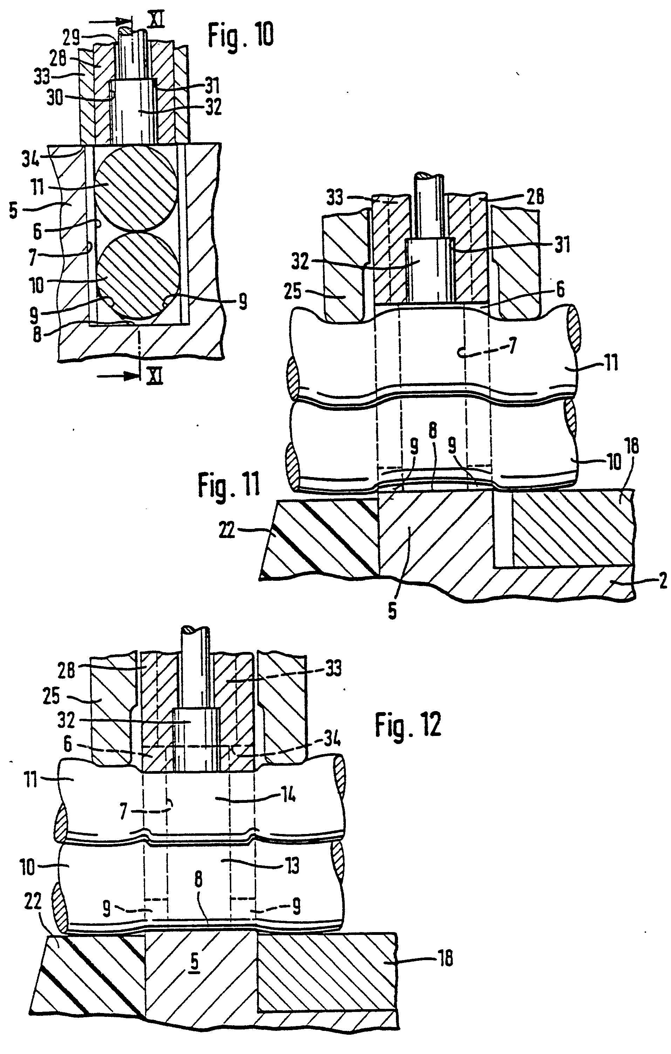

Figur 10 ein drittes Ausführungsbeispiel der Vorrichtung mit dem Kommutator im Schnitt entlang der Linie X-X in Figur 2,

Figur 11 die Vorrichtung im Schnitt entlang der Linie XI-XI in Figur 10 vor dem Befestigen der Wicklungsenden,

Figur 12 dieselbe Vorrichtung nach dem Befestigen der Wicklungsenden und

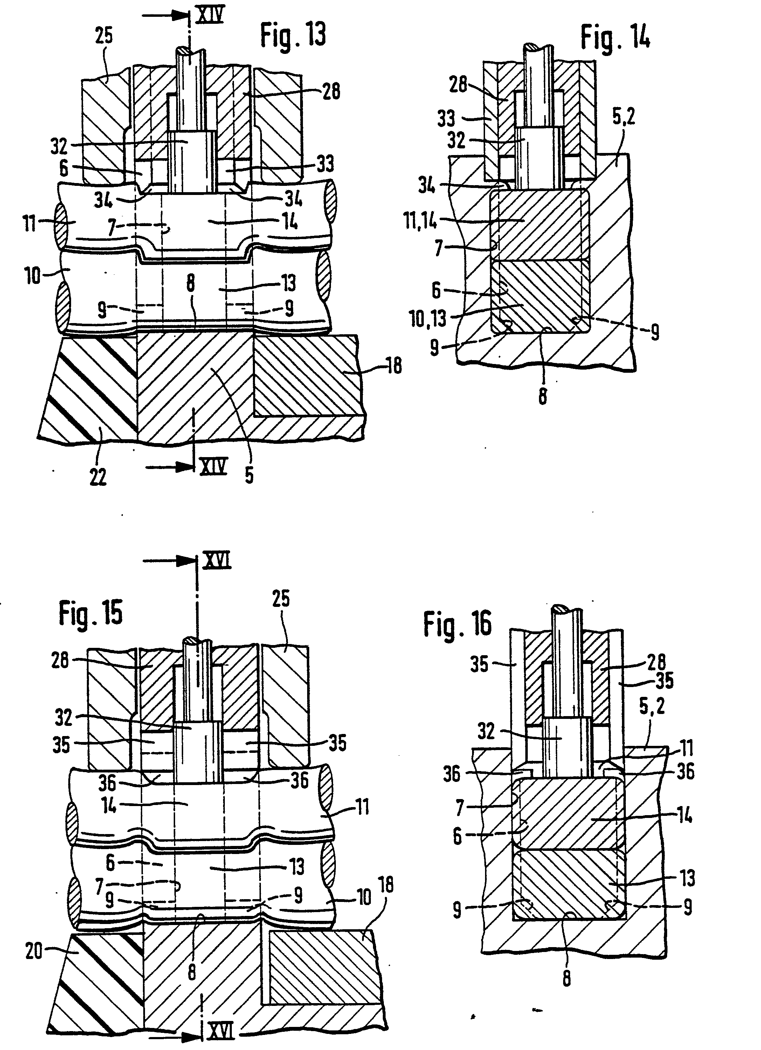

Figur 13 mit einer zusätzlichen Sicherung der Wicklungsenden im Kommutatorschlitz,

Figur 14 die Vorrichtung im Schnitt entlang der Linie XIV-XIV in Figur 13,

Figur 15 eine Vorrichtung nach Figur 13 mit einer abgewandelten zusätzlichen Sicherung und

Figur 16 die Vorrichtung im Schnitt entlang der Linie XVI-XVI in Figur 15.

Beschreibung der Ausführungsbeispiele

Ein Kommutator 1 für elektrische Maschinen ist aus einer Vielzahl von Segmenten 2 gebildet, die in einer Isolierstoffnabe 3 in an sich bekannter und nicht näher dargestellter Weise verankert sind. Die Segmente 2 sind in Umfangsrichtung durch eine Isolierstoffschicht 4 voneinander getrennt. Die Segmente 2 weisen an einem Ende je eine Anschlußfahne 5 auf. In der Anschlußfahne 5 ist ein offener Schlitz 6 ausgebildet, welcher sich durch die Anschlußfahne 5 parallel zur Längsachse des Kommutators 1 erstreckt. Bei einem ersten Ausführungsbeispiel des Schlitzes 6 (Figuren 1 bis 5) ist etwa in der Mitte seiner Seitenwände eine radial auf die Längsachse des Kommutators 1 zulaufende Erweiterung 7 ausgebildet. Sie endet auf dem Grund 8 des Schlitzes 6. Die Erweiterung 7 kann einen kreisrunden, ovalen, drei- oder mehreckigen Querschnitt haben. Der Schlitz 6 ist nahe seinem Grund 8 neben der Erweiterung 7 keilförmig verengt, wodurch ebene Anlageflächen 9 gebildet sind.

Die in dem Schlitz 6 zu befestigen Wicklungsenden 10 und 11 eines Ankers 12 der elektrischen Maschine können gleichzeitig in den Schlitz 6 eingelegt werden (Figuren 2 und 3). Das Wicklungsende 10 bildet die Unterlage und liegt an den Anlageflächen 9 des Schlitzes 6 an. Das Wicklungsende 11 bildet die Oberlage und liegt auf der Unterlage 10. Mit einer weiter unten beschriebenen Vorrichtung sind die Wicklungsenden 10 und 11 gemeinsam im Schlitz 6 auf mechanischem Wege durch radiales Einpressen, -drücken oder Verstemmen des im Schlitz 6 liegenden Teils 13 bzw. 14 der Wicklungsenden 10 und 11 mit dem zugehörigen Segment 2 fest verbunden. Dabei verformt sich der Teil 13 bzw. 14 der Wicklungsenden 10 und 11 derart, daß das weggedrückte Material in Umfangsrichtung in die Erweiterung 7 ausweicht. Die Wicklungsenden 10 und 11 sind dadurch intensiv mit dem Segment 2 verbunden. Die Verbindung ist warmfest und schleuderfest. Auch können sich die Wicklungsenden 10 und 11 nicht in axialer Richtung aus dem Schlitz 6 entfernen.

Bei Wicklungsenden 10 und 11 beispielsweise mit größerem Durchmesser eignet sich zum sicheren mechanischen Verbinden mit dem zugeordneten Segment 2 das lagenweise Einpressen der Wicklungsenden 10 und 11. Zunächst ist das Wicklungsende 10, das die Unterlage bildet, in den Schlitz 6 eingelegt und festgedrückt. Danach wird das Wicklungsende 11 als Oberlage in den Schlitz 6 eingelegt und verstemmt (Figuren 4 und 5).

Beide Einlege- und Befestigungsarten eignen sich auch für das entsprechende Einlegen und Verpressen der Wicklungsenden 10 und 11 gleichzeitig in allen Schlitzen 6 des Kommutators 1.

Für das Verbinden der Ankerwicklungsenden 10, 11 mit dem zugeordneten Segment 2 des Kommutators 1 ist eine Vorrichtung vorgesehen, in der mindestens ein Stempel radial zur Längsrichtung des in der Vorrichtung aufnehmbaren Kommutators 1 geführt ist. Mit dem Stempel wird durch Verformen eines Teils 13, 14 der Wicklungsenden 10 bzw. 11 auf mechanischem Wege das Wicklungsende 10, 11 im Schlitz 6 des Kommutatorsegments 2 verstemmt. Die dafür erforderlichen Druckkräfte sind verhältnismäßig gering. Ausführungsbeispiele der Vorrichtung sind im folgenden beschrieben.

Das erste Ausführungsbeispiel (Figur 8) einer Vorrichtung hat ein Aufnahmeteil 15 für den Anker 12. Der Anker 12 hat eine Antriebswelle 16, auf der der Kommutator 1 und eine Ankerwicklung 17 angeordnet sind, deren Wicklungsenden 10, 11 in den Schlitzen 6 der Anschlußfahnen 5 der Kommutatorsegmente 2 zu befestigen sind. Das Aufnahmeteil 15 hat einen hülsensförmigen Stützrand 18, welcher die Lauffläche 19 des Kommutators 1 bis an die Anschlußfahnen 5 umgibt. Der Außendurchmesser des Stützrandes 18 ist nur unwesentlich kleiner als der Durchmesser des vom Grund 8 des Schlitzes 6 des Kommutators 1 gebildeten Kreises. Ein Stempel 29 ist in einem Führungsteil 20 radial zur Längsachse des Kommutators 1 und somit des Aufnahmeteils 15 geführt. Desgleichen ist am Führungsteil 20 ein dem Stempel 19 zugeordneter Führungsfinger 21 für das Wicklungsende 10, 11 radial bewegbar angeordnet.

Durch den Führungsfinger 21 sind die zugeordneten Wicklungsenden 10 und 11 einzeln oder gemeinsam in den Schlitzen 6 eingelegt und dort gehalten, während mit dem Stempel 19 der im Schlitz 6 liegende Teil 13 und 14 der Wicklungsenden 10, 11 dementsprechend einzeln oder gemeinsam verstemmt wird.

Das Wicklungsende 10, welches im Schlitz 6 als Unterlage an den Grund 8 und die keilförmig verlaufenden Anlageflächen 9 gepreßt wird, liegt an einer Seite der Anschlußfahne 5 auf dem Stützrand 18 auf. An der anderen Seite der Anschlußfahne 5 erstreckt sich ein Auflagebund 22 der Isolierstoffnabe 3 über die Stirnseite des Kommutators 1 bis nahe an den Grund 8 der Schlitze 6 und stützt ankerseitig das Wicklungsende 10.

Die Vorrichtung eignet sich auch für das gleichzeitige Verstemmen der Wicklungsenden 10, 11 in allen Schlitzen 6. Dazu sind im Führungsteil 20 der Anzahl der Segmente 2 entsprechend viele Stempel 19' und Führungsfinger 21' in gleichem Winkelabstand zueinander radial auf die Längsachse des Kommutators 1 zulaufend geführt.

Ein zweites Ausführungsbeispiel (Figur 9) der Vorrichtung hat einen Stempelhalter 23, in dem ein radial zur Längsachse des Kommutators 1 geführter Stempel 24 befestigt ist. Der Stempel 24 ist von einem Niederhalber 25 umgeben. Der Niederhalter 25 stützt sich über ein federndes Element 26 am Stempelhalter 23 ab und ist somit gegenüber dem Stempel 24 federnd angeordnet. Der Niederhalter 25 hat zwei Halteenden 27, die etwas schmäler als die Breite des Schlitzes 6 sind. In Längsrichtung des Schlitzes 6 ragt deren äußere Kante etwas über den Schlitz 6 und somit über die Anschlußfahne 5 hinaus, während die innere Kante mit Abstand zum Stempel 24 endet.

Nach dem Einlegen des oder der Wicklungsenden 10, 11 werden Stempel 24 und Niederhalter 25 gemeinsam radial auf den Schlitz 6 zubewegt, bis sie auf dem Wicklungsende 11 aufliegen. Nach kurzem weiteren Bewegen bleibt der Niederhalter 25 am Wicklungsende 11 anliegend stehen und hält unter dem Einfluß des federnden Elementes 26 über das Wicklungsende 11 das die Unterlage bildende Wicklungsende 10 am Grund 8 des Schlitzes 6 und seinen keilförmigen Anlageflächen 9 durch Reibung fest. Der Stempel 24 wird jedoch weiter bewegt und verstemmt den Teil 13 ; 14 der Wicklungsenden 10 ; 11 der dabei teilweise in die Erweiterung 7 entweicht. Bei dem Umformen kann das vom Niederhalter 25, 27 gehaltene Wicklungsende 10, 11 auch nicht in Längsrichtung des Schlitzes 6 ausweichen.

Bei einem dritten Ausführungsbeispiel (Figuren 10 bis 14) der Vorrichtung zum Befestigen der Wicklungsenden 10, 11 in den Schlitzen 6 der Kommutatorsegmente 2 sind zwei Niederhalter und ein geteilter Stempel vorgesehen. Der erste, ebenfalls federnd gegenüber dem Stempel angeordnete Niederhalter 25 umgibt einen ersten Stempelteil 28. Die Halteenden 27 des ersten Niederhalters 25 sind auf die aus dem Schlitz 6 ragenden Abschnitte des Wicklungsendes 11 drückbar. Der Stempelteil 28 hat eine Längsbohrung 29 mit einem erweiterten Endabschnitt 30, der von einer Innenringschulter 31 begrenzt ist. Im erweiterten Endabschnitt 30 ist ein zweiter Niederhalter 32 eingesetzt, der zusammen mit dem Stempelteil 28 auf den im Schlitz 6 liegenden Teil der Wicklungsenden 10, 11 drückbar ist. Der zweite Niederhalter 32 ist in an sich bekannter und nicht näher dargestellter Weise in der Vorrichtung befestigt, so daß er beim Rückhub des Stempelteils 28 noch weiter auf den Teil 14 des Wicklungsendes 11 gedrückt bleibt. Der Stempelteil 28 ist von einem zweiten Stempelteil umgeben. Der zweite Stempelteil hat zwei kreisringabschnittförmige Stempelenden 33, welche auf den Rand 34 der Erweiterung 7 des Schlitzes 6 drückbar sind.

Der erste Niederhalter 25 drückt auf die aus dem Schlitz 6 ragenden Abschnitte der Wicklungsenden 10, 11 und hält sie in ihrer axialen Lage während des Befestigungsvorganges. Der erste Stempelteil 28 und der zweite Niederhalter 32 verformen den im Schlitz 6 liegenden Teil 13, 14 der Wicklungsenden 10, 11, so daß er teilweise in die Erweiterung 7 gelangt und das die Unterlage bildende Wicklungsende 10 dicht an den Auflageflächen 9 und am Grund 8 des Schlitzes 6 angepreßt ist. Der erste Stempelteil 28 wird danach in seine Ausgangsstellung gebracht, während die beiden Niederhalter 25 und 32 auf die Wicklungsenden 10, 11 gedrückt bleiben. Die bisher auf dem Rand 34 der Erweiterung 7 sitzenden Stempelenden 33 des zweiten Stempelteils verstemmen nunmehr den Rand 34 der Erweiterung 7. Dadurch sind die in die Erweiterung verformten Wicklungsenden 10, 11 ; 13, 14 zusätzlich im Schlitz 6 des Kommutatorsegments 2 gesichert.

Mit der abgewandelten Vorrichtung nach Figuren 13 und 14 ist der zweite Stempelteil mit Scherenden 35 versehen, welche die Ränder 36 des Schlitzes 6 neben der Erweiterung 7 über die im Schlitz 6 liegenden Abschnitte des die Oberlage bildenden Wicklungsendes 11 klammernd umlegen nach dem verformenden Verstemmen der Teile 13 und 14 der Wicklungsenden 10, 11 im Schlitz 6 und seiner Erweiterung 7.

Bei einem zweiten Ausführungsbeispiel des Schlitzes 37 (Figuren 6 und 7) sind seine Seitenwände als eine etwa dachförmig in den Schlitz 37 ragende Abweichung 38 ausgebildet. Dabei schließen die Flanken 39 der Abweichung 38 einen stumpfen Winkel ein. Die Abweichung 38 endet wiederum auf dem Grund 8 des Schlitzes 37. Sie kann auch einen trapezförmigen oder rechteckigem Querschnitt haben. Der Schlitz 37 ist nahe dem Grund 8 keilförmig verengt, wodurch die ebenen Anlageflächen 9 gebildet sind.

Die in dem Schlitz 37 zu befestigenden Ankerwicklungsenden 10 und 11 können in der gleichen Weise eingelegt und mit den entsprechenden Vorrichtungen wie die in den Schlitz 6 eingelegten Wicklungsenden 10 und 11 befestigt werden. Dabei weicht beim Einpressen das überschüssige Material des Teils 13, 14 der Wicklungsenden 10 und 11 an die Flanken 39 aus.

## Patentansprüche

1. Verbindung zwischen Ankerwicklungsenden (10, 11) und zugeordneten Segmenten (2) eines Kommutators (1), die mit je einem Schlitz (6 ; 37) versehen sind, in welchem mindestens ein Wicklungsende (10, 11) eingelegt und elektrisch leitend und mechanisch an dem Segment (2) befestigt ist, dadurch gekennzeichnet, daß die Seitenwände des Schlitzes (6 ; 37) mit mindestens einer in Umfangsrichtung des Kommutators (1) ragenden Abweichung (7 ; 38, 39) von der parallel zur und radial durch die Längsachse des Kommutators (1) verlaufenden Mittelebene des Schlitzes (6 ; 37) versehen sind, welche Abweichung (7 ; 38, 39) sich über die zugehörige Seitenwand von deren äußerem offenem Ende bis zum Grund (8) des Schlitzes (6 ; 37) im wesentlichen radial zur Längsachse des Kommutators (1) erstreckt und in welche Abweichung (7 ; 38, 39) mindestens ein Teil (13 ; 14) des in den Schlitz (6 ; 37) eingelegten Wicklungsendes (10 ; 11) in Umfangsrichtung des Kommutators (1) ausweichend verformt formschlüssig eingepreßt ist.

2. Verbindung nach Anspruch 1, dadurch gekennzeichnet, daß die Abweichung (38) in jeder Seitenwand des Schlitzes (37) als in den Schlitz ragender Vorsprung (38) ausgebildet ist, an dessen Flanken (39) der in dem Schlitz (37) aufgenommene Teil (13 ; 14) des Wicklungsendes (10 ; 11) in Umfangsrichtung des Kommutators (1) ausweichend und formschlüssig verformt gepreßt ist.

3. Verbindung nach Anspruch 1, dadurch gekennzeichnet, daß die Abweichung jeder Seitenwand des Schlitzes (6) als Erweiterung (7) des Schlitzes (6) ausgebildet ist, in welche ein Teil (13 ; 14) des in den Schlitz (6) in Längsrichtung eingelegten Wicklungsendes (10 ; 11) in Umfangsrichtung des Kommutators (1) ausweichend verformt formschlüssig eingepreßt ist.

4. Verbindung nach Anspruch 1, dadurch gekennzeichnet, daß der Schlitzgrund (8) mit einer Verengung mit mindestens einer ebenen Fläche (9) versehen ist.

5. Verbindung nach Anspruch 1, dadurch gekennzeichnet, daß bei mehr als einem im Schlitz (6 ; 37) angeordneten Wicklungsende (10 ; 11) die Wicklungsenden (10 ; 11) gleichzeitig an die Abweichungen (7 ; 38, 39) des Schlitzes (6 ; 37) gepreßt sind.

6. Verbindung nach Anspruch 1, dadurch gekennzeichnet, daß bei mehr als einem im Schlitz (6 ; 37) angeordneten Wicklungsende (10 ; 11) die die Unterlage (10) und Oberlage (11) bildenden Wicklungsenden lagenweise an die Abweichungen (7 ; 38, 39) des Schlitzes (6 ; 37) gepreßt sind.

7. Verbindung nach Anspruch 3, dadurch gekennzeichnet, daß der Rand der Erweiterung (7) mit dem in die Erweiterung (7) gepreßten Teil (13 ; 14) des Wicklungsendes (10 ; 11) zusätzlich radial verpreßt ist.

8. Verbindung nach Anspruch 3, dadurch gekennzeichnet, daß die Ränder (36) des Schlitzes (6) um die an den in die Erweiterung (7) in Umfangsrichtung gepreßten Teil (13 ; 14) anschließenden Abschnitte des Wicklungsendes (10 ; 11) zusätzlich klammernd gelegt sind.

9. Verbindung nach Anspruch 2, dadurch gekennzeichnet, daß die Ränder der Flanken (39) um den in den Schlitz (37) eingelegten Abschnitt (13 ; 14) des Wicklungsendes (10 ; 11) zusätzlich klammernd gelegt sind.

10. Vorrichtung zum Herstellen der Verbindung zwischen Ankerwicklungsenden und Kommutatorsegmenten nach Anspruch 1, dadurch gekennzeichnet, daß ein radial auf die Längsachse des Kommutators (1) bewegbarer Stempel (19) auf den im Bereich der Abweichungen der Seitenwändes des Schlitzes (6 ; 37) liegenden und teilweise an die Abweichungen (7 ; 38, 39) bringbaren Teil (13 ; 14) des in den Schlitz (6 ; 37) des Kommutatorsegments (2) eingelegten Wicklungsendes (10 ; 11) preßbar ist.

11. Vorrichtung zum Herstellen der Verbindung zwischen Ankerwicklungsenden und Kommutatorsegmenten nach Anspruch 1, dadurch gekennzeichnet, daß ein federnd angeordneter Niederhalter (25) mit Halteenden (27) auf das in den Schlitz (6 ; 37) des Kommutators (1) eingelegte Wicklungsende (10 ; 11) neben dessen umzuformenden Teil (13 ; 14) federnd aufsetzbar ist und ein gegenüber dem Niederhalter (25) bewegbarer Stempel (24) auf den umzuformenden und dabei teilweise an die Abweichungen (7 ; 38) der Seitenwände bringbaren Teil (13 ; 14) des Wicklungsendes (10 ; 11) preßbar ist.

12. Vorrichtung zum Herstellen der Verbindung zwischen Ankerwicklungsenden und Kommutatorsegmenten nach den Ansprüchen 1, 3 und 7, dadurch gekennzeichnet, daß ein federnd angeordneter erster Niederhalber (25) mit Halteenden (27) auf das in den Schlitz (6) des Kommutatorsegments (2) eingelegte Wicklungsende (10, 11) neben dem im Bereich der Erweiterung (7) des Schlitzes (6) liegenden Teil (13, 14) des Wicklungsendes (10, 11) federnd aufsetzbar ist und ein gegenüber dem ersten Niederhalter (25) bewegbarer geteilter Stempel (28, 33) in dem ein zweiter Niederhalter (32) geführt ist, angeordnet ist, dessen Innenstempel (28) zusammen mit dem zweiten Niederhalter (32) auf den im Bereich der Erweiterung (7) des Schlitzes (6) liegenden und teilweise in die Erweiterung (7) bringbaren Teil (13 ; 14) des Wicklungsendes (10, 11) preßbar ist, und dessen Außenstempel (33) nach dem Zurückziehen lediglich des Innenstempels (28) den Rand (34) der Erweiterung (7) in die Erweiterung (7) drükkend auf den Rand (34) radial preßbar ist.

13. Vorrichtung zum Herstellen der Verbindung zwischen Ankerwicklungsenden und Kommutatorsegmenten nach den Ansprüchen 1, 2, 3, 8 und 9, dadurch gekennzeichnet, daß ein federnd angeordneter erster Niederhalter (25) mit Halteenden (27) auf das Wicklungsende (10 ; 11) beiderseits des im Bereich der Abweichungen (7 ; 38, 39) der Seitenwände des Schlitzes (6 ; 37) liegenden Teils (13 ; 14) des in den Schlitz (6 ; 37) eingelegten Wicklungsendes (10 ; 11) federnd aufsetzbar ist und ein gegenüber dem ersten Niederhalter (25) bewegbarer Stempel (28), in dem ein zweiter Niederhalter (32) geführt ist, angeordnet ist, der Stempel (28) und der zweite Niederhalter (32) auf den umzuformenden und teilweise an die Abweichungen (7 ; 38, 39) der Seitenwände zubringenden Teil (13 ; 14) des Wicklungsendes (10 ; 11) preßbar ist, und eine auf den Rändern (36) der Randabschnitte des Schlitzes (6 ; 37) sitzende Schervorrichtung (35) nach dem Zurückziehen lediglich des Stempels (28) die Ränder (36) über die Abschnitte des Wicklungsendes (11) scherend radial auf die Ränder (36) drückbar ist.

14. Vorrichtung nach einem der Ansprüche 10 bis 13, dadurch gekennzeichnet, daß beiderseits der Schlitze (6 ; 37) das Wicklungsende (10) stützende Auflagen (18, 22) vorgesehen sind.

15. Vorrichtung nach einem der Ansprüche 10 bis 13, dadurch gekennzeichnet, daß eine Aufnahme (15) für den Kommutator (1) drehbar angeordnet ist, mittels welcher die Schlitze (6 ; 37) mit eingelegtem Wicklungsende (10 ; 11) in die Stellung zum Verbinden der Wicklungsenden (10 ; 11) mit den Kommutatorsegmenten (2) teilungsschrittweise drehbar sind.

16. Vorrichtung nach einem der Ansprüche 10 bis 13, dadurch gekennzeichnet, daß sie mit der Anzahl der Schlitze (6 ; 37) des Kommutators (1) entsprechenden Verformungsstempeln (19 ; 24, 28, 33 ; 28, 35) versehen ist, mittels welcher die Wicklungsenden (10 ; 11) in allen Schlitzen (6 ; 37) gleichzeitig befestigbar sind.

**Claims**

1. Connection between armature coil ends (10, 11) and relative commutor (1) segments (2), which are each provided with a slot (6 ; 37), in which at least one coil end (10, 11) is inserted and is secured with electric conduction and mechanically to the segment (2), characterised in that the side walls of the slot (6 ; 37) are provided with at least one offset (7 ; 38, 39) projecting in the circumferential direction of the commutator (1), from the central plane of the slot (6 ; 37) running parallel to and radially through the longitudinal axis of the commutator (1), the said offset (7 ; 38, 39) extending over the associated side wall from its outer open end to the base (8) of the slot (6 ; 37) substantially radially to the longitudinal axis of the commutator (1), and at least a part (13 ; 14) of the coil end (10 ;11) inserted into the slot (6 ; 37) being pressed into the said offset (7 ; 38, 39) into mechanical interengagement, by being deformed and shifting in the circumferential direction of the commutator (1).

2. Connection according to Claim 1, characterized in that the offset (38) is formed in each side wall of the slot (37) as a projection (38) extending into the slot, and the part (13 ; 14) of the coil end (10 ; 12) received in the slot (37) is pressed against its flanks (39), by shifting in the circumferential direction of the commutator (1) and being deformed into mechanical interengagement.

3. Connection according to Claim 1, characterized in that the offset of each side wall of the slot (6) is formed as an enlargement (7) of the slot (6), and a part (13 ; 14) of the coil end (10 ; 11) inserted into the slot (6) in the longitudinal direction is pressed into mechanical interengagement, by being deformed and shifting in the circumferential direction of the commutator (1).

4. Connection according to Claim 1, characterized in that the base (8) of the slot is provided with a contraction with at least one flat surface (9).

5. Connection according to Claim 1, characterized in that, there being more than one coil end (10 ; 11) arranged in the slot (6 ; 37), the coil ends (10 ; 11) are pressed simultaneously against the offsets (7 ; 38, 39) of the slot (6 ; 37).

6. Connection according to Claim 1, characterized in that, there being more than one coil end (10 ; 11) arranged in the slot (6 ; 37), the coil ends which constitute the lower layer (10) and the upper layer (11) are pressed successively against the offsets (7 ; 38, 39) of the slot (6 ; 37).

7. Connection according to Claim 3, characterized in that the edge of the enlargement (7) is also radially compressed, along with the part (13 ; 14) of the coil end (10 ; 11) pressed into the enlargement (7).

8. Connection according to Claim 3, characterized in that the edges (36) of the slot (6) are additionally laid like a clamp around the portions of the coil end (10 ; 11) adjoining the parts (13 ; 14) pressed in the circumferential direction into the enlargement (7).

9. Connection according to Claim 2, characterized in that the edges of the flanks (39) are additionally laid like a clamp around the portion (13 ; 14) of the coil end (10 ; 11) inserted into the slot (37).

10. Device for manufacture of the connection between armature. coil ends and commutator segments according to Claim 1, characterized in that a plunger (19) movable radially with respect to the longitudinal axis of the commutator (1) can be pressed against a part (13 ; 14) of the coil end (10 ; 11) inserted in the slot (6 ; 37) of the commutator segment (2), this part lying in the region of the offsets of the side walls of the slot (6 ; 37) and being able to be brought partly against the offsets (7 ; 38, 39).

11. Device for manufacture of the connection between armature coil ends and commutator segments according to Claim 1, characterized in that a resiliently arranged hold-down member (25) with holding ends (27) can be resiliently applied to the coil end (10 ; 11) inserted in the slot (6 ; 37) of the commutator (1), adjacent to the part (13 ; 14) of it to be deformed, and a plunger (24) movable relatively to the hold-down member (25) can be pressed against the part (13 ; 14) of the coil end (10 ; 11) that is to be deformed and hence moved partly against the offsets (7 ; 38) of the side walls.

12. Device for manufacture of the connection between armature coil ends and commutator segments according to Claims 1, 3 and 7, characterized in that a resiliently-arranged first hold-down member (25) with holding ends (27) can be resiliently applied to the coil end (10, 11) inserted in the slot (6) of the commutator segment (2), adjacent to the part (13, 14) of the coil end (10, 11) lying in the region of the enlargement (7) of the slot (6), and there is a divided plunger (28, 33) movable relatively to the first hold-down member (25), in which plunger there is guided a second hold-down member (32), the inner plunger (28) thereof being able to be pressed, together with the second hold-down member (32), into the part (13 ; 14) of the coil end (10, 11) which lies in the region of the enlargement (7) of the slot (6) and which can be moved partly into the enlargement (7), and the outer plunger (33) thereof being able to be pressed radially, after the withdrawal of only the inner plunger (28) from the edge (34) of the enlargement (7), into the enlargement (7) and exerting pressure on the edge (34).

13. Device for manufacture of the connection between armature coil ends and commutator segments according to Claims 1, 2, 3, 8 and 9, characterized in that a resiliently-arranged first hold-down member (25) with holding ends (27) can be applied resiliently against the coil end (10 ; 11), on both sides of the part (13 ; 14) of the coil end (10 ; 11) inserted in the slot (6 ; 37) lying in the region of the offsets (7 ; 38, 39) of the side walls of the slot (6 ; 37), and there is a plunger (28) movable relatively to the first hold-down member (25), in which is guided a second hold-down member (32), the plunger (28) and the second hold-down member (32) can be pressed against the part (13 ; 14) of the coil end (10 ; 11) which is to be deformed and which is to be moved partly into the offsets (7 ; 38, 39) of the side walls, and there is a cutting device (35) seated on the edges (36) of the edge portions of the slot (6 ; 37) which, after withdrawal of only the plunger (28) from the edges (36), can be pressed radially against the edges (36), thus cutting the edges (36) over the portions of the coil end (11).

14. Device according to one of claims 10 to 13, characterized in that abutments (18, 22) are provided on both sides of the slot (6 ; 37) for supporting the coil end (10).

15. Device according to one of claims 10 to 13, characterized in that there is a rotatable receiver (15) for the commutator (1), by means of which the slots (6 ; 37), with the coil end (10 ; 11) inserted in it, can be rotated in equal steps into the position for connection of the coil ends (10 ; 11) with the commutator segments (2).

16. Device according to one of claims 10 to 13, characterized in that it is provided with deformation plungers (19 ; 24, 28, 33 ; 28, 35) corresponding to the number of slots (6 ; 37) in the commutator (1), by means of which the coil ends (10 ; 11) in all the slots (6 ; 37) can be secured simultaneously.

**Revendications**

1. Connexion entre les extrémités des enroulements d'induit (10, 11) et les segments relatifs (2) d'un collecteur (1), qui sont chacun pourvus d'une fente (6, 37), dans laquelle au moins une extrémité d'enroulement (10, 11) est insérée, et qui est fixée mécaniquement au segment (2) et reliée électriquement à ce segment (2), caractérisée en ce que les parois latérales de la fente (6, 37) sont munies d'au moins une dérivation (7, 38, 39) qui dépasse en direction périphérique du collecteur (1) par rapport au plan moyen de la fente (6, 37) se développant parallèlement et radialement par rapport à l'axe longitudinal du collecteur (1), la dérivation (7, 38, 39) s'étendant dans la paroi latérale correspondante de la fente (6, 37), depuis son extrémité extérieure ouverte jusqu'à sa base (8), de façon essentiellement radiale par rapport à l'axe longitudinal du collecteur (1), et en ce que dans une telle dérivation (7, 38, 39) au moins une partie (13, 14) de l'extrémité d'enroulement (10, 11) introduite dans la fente (6, 37) est pressée par imbrication déformée et décalée en direction périphérique du collecteur (1).

2. Connexion selon la revendication 1, caractérisée en ce que la dérivation (38) dans chaque paroi latérale de la fente (37) est formée en saillie (38) dépassant dans la fente, et sur les flancs de laquelle la partie (13, 14) de l'extrémité d'enroulement (10, 11) reçue dans la fente (37) est pressée, déformée par imbrication et décalée en direction périphérique du collecteur (1).

3. Connexion selon la revendication 1, caractérisée en ce que la dérivation de chaque paroi latérale de la fente (6) est formée en un élargissement (7) de la fente (6), dans laquelle une partie (13, 14) de l'extrémité d'enroulement (10, 11) introduite en direction longitudinale dans la fente (6) est pressée par imbrication déformée et décalée en direction périphérique du collecteur (1).

4. Connexion selon la revendication 1, caractérisée en ce que la base (8) de la fente présente un rétrécissement avec au moins une surface plane (9).

5. Connexion selon la revendication 1, caractérisée en ce que dans le cas où plusieurs extrémités d'enroulements (10, 11) sont disposées dans la fente (6, 37), les extrémités d'enroulements (10, 11) sont pressées en même temps dans les dérivations (7, 38, 39) de la fente (6, 37).

6. Connexion selon la revendication 1, caractérisée en ce que dans le cas de plusieurs extrémités d'enroulements (10, 11) disposées dans la fente (6, 37), les extrémités d'enroulement, constituant l'élément inférieur (10) et l'élément supérieur (11) selon leur position, sont pressées contre les dérivations (7, 38, 39) de la fente (6, 37).

7. Connexion selon la revendication 3, caractérisée en ce que le bord de l'élargissement (7) est pressé radialement de façon supplémentaire avec la partie pressée (13, 14) de l'extrémité d'enroulement (10, 11) dans l'élargissement (7).

8. Connexion selon la revendication 3, caractérisée en ce que les bords (36) de la fente (6) sont posés et pincés à titre supplémentaire autour des sections de l'extrémité d'enroulement (10, 11) contiguës à la partie pressée (13, 14) en direction périphérique dans l'élargissement (7).

9. Connexion selon la revendication 2, caractérisée en ce que les bords des flancs (39) sont posés et pincés à titre supplémentaire autour de la section (13, 14) de l'extrémité d'enroulement (10, 11) introduire dans la fente (37).

10. Dispositif pour la fabrication de la connexion entre les extrémités d'enroulements d'induit et les segments du collecteur, selon la revendication 1, caractérisé en ce qu'un poinçon (19) mobile en direction radiale par rapport à l'axe longitudinal du collecteur (1) peut être pressé sur la partie (13, 14) de l'extrémité d'enroulement (10, 11) introduite dans la fente (6, 37) du segment (2) du collecteur, cette partie (13, 14) se trouvant dans la zone des dérivations des parois latérales de la fente (6, 37) et pouvant être partiellement décalée dans les dérivations (7, 38, 39).

11. Dispositif pour la fabrication de la connexion entre les extrémités d'enroulements d'induit et les segments du collecteur, selon la revendication 1, caractérisé en ce qu'un support inférieur (25), disposé de façon élastique et avec des extrémités de maintien (27), peut être posé de façon élastique sur l'extrémité d'enroulement (10, 11) introduite dans la fente (6, 37) du collecteur (1), au voisinage de la partie (13, 14) à déformer de cette extrémité d'enroulement (10, 11), et en ce qu'un poinçon (24) mobile par rapport au support inférieur (25) peut être pressé sur la partie (13, 14) de l'extrémité d'enroulement (10, 11) à déformer, cette partie (13, 14) pouvant de ce fait être partiellement décalée dans les dérivations (7, 38) des parois latérales.

12. Dispositif pour la fabrication de la connexion entre les extrémités d'enroulements d'induit et les segments du collecteur, selon les revendications 1, 3 et 7, caractérisé en ce qu'un premier support inférieur élastique (25) avec des extrémités de maintien (27) peut être posé de façon élastique sur l'extrémité d'enroulement (10, 11) introduite dans la fente (6) du segment (2) du collecteur, à côté de la partie (13, 14) de l'extrémité d'enroulement (10, 11) située dans la zone de l'élargissement (7) de la fente (6), et en ce qu'un poinçon fractionné (28, 33) mobile par rapport au premier support inférieur (25) est disposé, dans lequel est guidé un second support inférieur (32), et dont le poinçon intérieur (28) peut être pressé, en conjugaison avec le second support inférieur (32), sur la partie (13, 14) de l'extrémité d'enroulement (10, 11) qui est située dans la zone de l'élargissement (7) de la fente (6) et pouvant être partiellement décalée dans l'élargissement (7), et dont le poinçon extérieur (33), après le retrait uniquement du poinçon intérieur (28), peut être pressé radialement sur le bord (34) de l'élargissement (7), en appuyant sur le bord (34) dans l'élargissement (7).

13. Dispositif pour la fabrication de la connexion entre les extrémités d'enroulements d'induit et les segments du collecteur, selon les revendications 1, 2, 3, 8 et 9, caractérisé en ce qu'un premier support inférieur élastique (25) disposé avec des extrémités de maintien (27), peut être posé élastiquement sur l'extrémité d'enroulement (10, 11) des deux côtés de la partie (13, 14) de l'extrémité d'enroulement (10, 11) introduite dans la fente (6, 37), dans la zone des dérivations (7, 38, 39) des parois latérales de la fente (6, 37), et en ce qu'un poinçon (28), mobile par rapport au premier support inférieur (25), est disposé, dans lequel est guidé un second support inférieur (32), le poinçon (28) et le second support inférieur (32) pouvant être pressés sur la partie (13, 14) de l'extrémité d'enroulement (10, 11), cette partie (13, 14) devant être déformée et partiellement décalée dans les dérivations (7, 38, 39) des parois latérales, et en ce qu'un dispositif de ciseaux (35), situé sur les bords (36) des sections de bord de la fente (6, 37), peut être pressé radialement sur les bords (36), après le retrait uniquement du poinçon (28), en coupant les bords (36) au-dessus des sections de l'extrémité d'enroulement (11).

14. Dispositif selon l'une des revendications 10 à 13, caractérisé en ce que des deux côtés de la fente (6, 37) des appuis de soutien (18, 22) sont prévus pour l'extrémité d'enroulement (10).

15. Dispositif selon l'une des revendications 10 à 13, caractérisé en ce qu'une pièce d'insertion (15) est disposée pour le collecteur de façon à pouvoir tourner, au moyen de laquelle les fentes (6, 37), avec les extrémités d'enroulements (10, 11) introduites en position pour la connexion des extrémités d'enroulements (10, 11) avec les segments (2) du collecteur, peuvent tourner partiellement, pas à pas.

16. Dispositif selon l'une des revendications 10 à 13, caractérisé en ce que ce dispositif est muni de poinçons de déformation (19 ; 24, 28, 33 ; 28, 35) dont le nombre correspond au nombre des fentes (6, 37) du collecteur (1), au moyen desquels les extrémités d'enroulements (10, 11) peuvent être fixées simultanément dans toutes les fentes (6, 37).

0 139 882

Fig. 1

Fig. 2

Fig. 3

Fig. 4

Fig. 5

Fig. 6

Fig. 7

0 139 882

Fig. 8

Fig. 9

2

0 139 882

Fig. 10

Fig. 11

Fig. 12

0 139 882

Fig. 13

Fig. 14

Fig. 15

Fig. 16

4